# FASCICULE DE BREVET EUROPEEN

(11) **EP 3 413 146 B1**
(45) Date de publication et mention de la délivrance du brevet: **27.11.2019**
(21) Numéro de dépôt: 17174616.7
(22) Date de dépôt: 06.06.2017
(51) Int. Cl.: G04G 19/00, G04G 21/00, H02J 7/35, H04B 10/80, H04B 10/114, G04R 20/26, G04C 11/00, G04G 5/00

(54) **DISPOSITIF ELECTRONIQUE PERMETTANT DE RECEVOIR DES DONNEES**
ELEKTRONISCHE VORRICHTUNG ZUM EMPFANGEN VON DATEN
ELECTRONIC DEVICE FOR RECEIVING DATA

(43) Date de publication de la demande: 12.12.2018
(73) Titulaire: EM Microelectronic-Marin SA, 2074 Marin (CH)
(72) Inventeur: JAEGGI, Hugo, 2046 Fontaines (CH)
(74) Mandataire: ICB SA

(56) Documents cités:
- FR-A1- 2 566 205
- US-A1- 2016 266 554
- US-A1- 2016 299 475

## Description

### DOMAINE TECHNIQUE

La présente invention concerne le domaine des transmissions de données. L'invention concerne plus particulièrement une montre électronique permettant de recevoir des données.

### ART ANTERIEUR

Les montres dites « connectées », aptes à communiquer avec un appareil électronique tel qu'un smartphone, se sont imposées ces dernières années dans le milieu horloger. Le réglage ou la configuration d'une telle montre peut s'effectuer manuellement, notamment via l'activation de boutons poussoirs, de couronnes et/ou de touches tactiles, ce qui est relativement contraignant pour l'utilisateur ou le service après-vente chargé du réglage ou de la configuration. Par exemple, si la montre dispose d'un mécanisme à quantième perpétuel, le réglage de la position des éléments d'affichage analogiques du mécanisme de quantième perpétuel, et plus généralement le réglage du mécanisme de quantième perpétuel, peut s'effectuer en tirant et/ou tournant une couronne de la montre et/ou en pressant un ou des poussoirs de la montre. Ainsi, on sélectionne un type d'année (par exemple, bissextile) et on positionne correctement les différents éléments d'affichage, et plus généralement tous les éléments du mécanisme de quantième perpétuel. Non seulement ce procédé est fastidieux pour l'utilisateur, qui doit se rappeler et exécuter correctement toutes les opérations de réglage les unes après les autres, mais il induit en outre des risques d'erreurs et de décalages.

Pour éviter ces inconvénients, il est maintenant possible de régler ou configurer une montre électronique de façon automatique via un appareil électronique de type smartphone par exemple, en équipant la montre d'un dispositif supportant la technologie Bluetooth ou une technologie de communication en champ proche. Cependant, ce type de dispositif est assez complexe à mettre en place, est volumineux, consomme beaucoup d'énergie, et demande à incorporer des moyens de communication spécifiques tant sur l'appareil électronique que sur la montre, notamment des antennes. Ce dispositif doit également être certifié selon les standards en vigueur, ce qui occasionne un surcoût supplémentaire.

En guise d'alternative, il a donc été proposé d'envoyer des données de réglage d'un appareil électronique de type smartphone vers une montre par transmission lumineuse. Plus particulièrement, l'appareil électronique émet, par l'intermédiaire de son écran ou de son flash, des impulsions lumineuses modulées par les données de réglage ou de configuration. La montre, qui doit quant à elle être équipée d'un module récepteur comportant un capteur optique, et un démodulateur, reçoit les impulsions lumineuses modulées, puis les démodule pour en extraire les données de réglage ou de configuration, et enfin effectue le réglage ou la configuration approprié(e).

Toutefois, un inconvénient de ce procédé est que le module récepteur de la montre doit être réveillé manuellement, par exemple par un appui sur un bouton poussoir de la montre. En effet, la pile de la montre électronique sert de source d'énergie pour ce module récepteur, et cette pile verrait sa durée de vie drastiquement réduite si elle devait l'alimenter en permanence.

US2016/299475 A1 divulgue une montre électronique ayant une capteur optique apte à détecter une séquence d'impulsions lumineuses modulées par des données et une batterie rechargeable pour stocker de l'énergie électrique générée par le capteur optique pour alimenter un organe de commande de la montre.

### RESUME DE L'INVENTION

La présente invention a pour but de pallier ces inconvénients en proposant une montre électronique comportant un module récepteur destiné à recevoir des données de réglage ou de configuration d'un appareil électronique par transmission lumineuse, ledit module récepteur ne nécessitant pas d'être réveillé manuellement avant la transmission.

A cet effet, l'invention propose un dispositif électronique tel que défini dans la revendication 1.

Le démodulateur du module de réception de la montre électronique selon l'invention est alimenté par l'énergie de l'élément de stockage d'énergie, et non pas par la source d'énergie électrique (dans le cas où le dispositif électronique est une montre électronique, cette source d'énergie électrique est avantageusement la pile de la montre), ce qui le différencie de l'art antérieur. Tant que le capteur optique capte des rayons lumineux et/ou que l'élément de stockage d'énergie électrique contient de l'énergie, le module de réception fonctionne. Ainsi, en permanence (à moins de se trouver dans le noir complet), le module de réception cherche à détecter des données qui auraient été envoyées par un appareil électronique émetteur.

L'appareil électronique émetteur est avantageusement un smartphone, configuré pour émettre une séquence d'impulsions lumineuses modulées par les données à transmettre. Les impulsions lumineuses sont par exemple émises par l'écran du smartphone ou par son flash.

On comprend donc que l'invention permet l'affranchissement d'un réveil manuel du module de réception (par exemple par appui sur un bouton poussoir), et ceci sans impact négatif sur la durée de vie de la source d'énergie électrique.

Alternativement, le module de réception pourrait être alimenté uniquement par l'énergie des impulsions lumineuses au moment où le transfert des données doit s'effectuer. Ceci permet au capteur optique de ne pas avoir à scanner son environnement en permanence, mais uniquement après une ou deux secondes d'illumination, le temps de remplir le moyen de stockage d'énergie et d'alimenter le démodulateur pour qu'il se réveille et démarre son travail. Puis, le module de réception s'éteint une fois le transfert terminé. Naturellement, le protocole d'échange doit être adapté avec un préambule suffisant pour assurer que le module est réveillé avant le début de la modulation utile. On note qu'il est possible d'envoyer les données en plusieurs parties, et/ou d'envoyer plusieurs fois les mêmes parties, et de recomposer l'intégrité du message du côté du dispositif de réception.

En outre, le dispositif électronique peut comprendre les caractéristiques contenues dans l'une ou dans une combinaison techniquement possible des revendications 2 à 12.

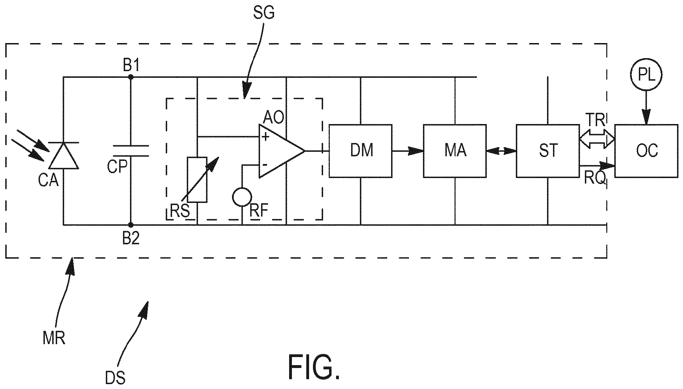

### BREVE DESCRIPTION DE LA FIGURE

Les buts, avantages et caractéristiques de l'invention apparaîtront plus clairement dans la description détaillée suivante d'au moins une forme de réalisation de l'invention donnée uniquement à titre d'exemple non limitatif et illustrée par le dessin annexé sur lesquels sont représentés des éléments d'un dispositif électronique selon l'invention.

### DESCRIPTION DETAILLEE D'UN MODE DE REALISATION

La figure montre certains éléments d'un dispositif électronique DS, dans le cas présent une montre électronique. Le dispositif électronique DS comporte de nombreux éléments, dont une source d'énergie électrique PL, par exemple une pile électrique ou une batterie, et un organe de commande OC alimenté par ladite source d'énergie PL. L'organe de commande OC est par exemple un microcontrôleur, une logique câblée, un réseau de logique programmable ou encore un microprocesseur. Dans un mode de réalisation préféré, le dispositif électronique DS est une montre électronique. Lorsque ladite montre est à affichage analogique, l'organe de commande OC contrôle un moteur pas à pas, non représenté, agencé pour actionner des rouages réglant la position de moyens d'affichage analogiques tels des aiguilles. Dans le cas d'une montre à affichage digital, l'organe de commande OC contrôle l'affichage.

Le dispositif électronique DS comporte en outre un module de réception MR, comportant les éléments suivants :
- Un capteur optique CA
- Un élément de stockage d'énergie CP
- Un système de contrôle automatique de gain SG (optionnel)
- Un démodulateur DM
- Un module d'authentification MA (optionnel)
- Une unité de stockage de données ST
- Des moyens de transmission TR.

Grâce au module de réception MR, le dispositif électronique DS est adapté pour recevoir par transmission lumineuse des données provenant d'un appareil électronique émetteur. Lorsque le dispositif électronique DS est une montre, ces données sont avantageusement des données de réglage ou de configuration de la montre. L'appareil électronique émetteur est avantageusement un smartphone, configuré pour émettre une séquence d'impulsions lumineuses modulées par les données à transmettre. Les impulsions lumineuses sont par exemple émises par l'écran du smartphone ou par son flash. La modulation est avantageusement basée sur un code de Manchester, pour lequel on n'observe pas de longues pauses entre les impulsions lumineuses. En effet, on cherche à optimiser la charge de l'élément de stockage d'énergie CP en limitant les écarts entre les impulsions.

Le capteur optique CA produit, lorsqu'il est exposé à un rayonnement du domaine optique, un signal électrique. Le capteur optique CA est par exemple une photodiode, un phototransistor, ou encore une cellule photovoltaïque. Le capteur optique CA peut également être une combinaison de ces éléments en parallèle et/ou en série.

L'élément de stockage d'énergie CP est par exemple un condensateur ou une batterie rechargeable. L'élément de stockage CP est connecté aux bornes du capteur optique CA, de sorte à se charger lorsque le capteur optique CA génère un signal électrique.

Le système de contrôle automatique de gain SG comporte, dans un mode de réalisation non limitatif, une résistance variable RS, un amplificateur opérationnel AO, et une source de tension de référence RF. Une broche d'alimentation positive de l'amplificateur opérationnel AO est connectée à une première borne B1 de l'élément de stockage CP, tandis qu'une borne d'alimentation négative est connectée à une deuxième borne B2 de l'élément de stockage CP. Ainsi, l'amplificateur opérationnel AO est agencé de sorte à être alimenté par l'élément de stockage CP. De plus, l'entrée non inverseuse de l'amplificateur opérationnel AO est connectée la première borne B1, elle-même connectée à la résistance variable RS. La résistance variable RS est connectée de l'autre côté à la deuxième borne B2. Quant à l'entrée inverseuse de l'amplificateur opérationnel AO, elle est connectée à la source de tension de référence RF, ladite source RF étant connectée de l'autre côté à la deuxième borne B2.

Le démodulateur DM est lui-aussi agencé de sorte à être alimenté par l'élément de stockage CP : l'une de ses bornes d'alimentation est reliée à la première borne B1, et l'autre de ses bornes d'alimentation est reliée à la deuxième borne B2. De plus, une entrée du démodulateur DM est connectée à une sortie de l'amplificateur opérationnel AO. Une sortie du démodulateur DM est connectée à la résistance variable RS et/ou à la source de tension de référence RF, pour former une boucle de contre-réaction permettant de d'ajuster la valeur de la résistance variable RS et/ou la valeur de référence.

Le module d'authentification MA est lui-aussi agencé de sorte à être alimenté par l'élément de stockage CP : l'une de ses bornes d'alimentation est reliée à la première borne B1, et l'autre de ses bornes d'alimentation est reliée à la deuxième borne B2. De plus, une entrée du module d'authentification MA est connectée à une sortie du démodulateur DM.

Dans un mode de réalisation, l'unité de stockage de données ST est agencée de sorte à être alimenté par l'élément de stockage CP : l'une de ses bornes d'alimentation est reliée à la première borne B1, et l'autre de ses bornes d'alimentation est reliée à la deuxième borne B2. Alternativement, l'unité de stockage de données ST est alimentée par la source d'énergie électrique PL : l'une de ses bornes d'alimentation est reliée à la source d'énergie électrique PL, et l'autre de ses bornes d'alimentation est reliée à la deuxième borne B2. Dans les deux cas cependant, une entrée de l'unité de stockage de données ST est connectée à une sortie du module d'authentification MA.

Enfin, les moyens de transmission TR entre l'organe de commande OC et l'unité de stockage de données ST sont une interface de liaison série. De plus, on note que les moyens de transmission TR sont aptes à transmettre des requêtes RQ à l'organe de commande OC.

Lorsque le capteur optique CA est soumis à un rayonnement lumineux, il génère un signal électrique qui charge l'élément de stockage d'énergie CP. Une partie de cette énergie est utilisée pour alimenter le système de contrôle automatique de gain SG, le démodulateur DM, le module d'authentification MA et l'unité de stockage de données ST.

En parallèle, le signal électrique généré par le capteur optique CA est transmis au système de contrôle automatique de gain SG, qui permet d'ajuster de manière continue le gain du module de réception pour maintenir le signal électrique à un niveau d'amplitude relativement constant, quelles que soient les conditions lumineuses environnantes auxquelles est soumis le rayonnement lumineux. Puis, le signal électrique est transmis au démodulateur DM, qui tente d'en extraire des données et éventuellement également des informations d'horloge. Naturellement, si le rayonnement lumineux ne correspond à aucune donnée (s'il provient d'une lampe ou du soleil, par exemple), des données inexploitables sont transmises du démodulateur DM au module d'authentification MA. A réception de données, des moyens d'identification du module d'authentification MA tentent de reconnaître un identifiant de référence. En effet, le module de réception MR a été préalablement appareillé avec au moins un appareil électronique émetteur, de sorte que l'appareil électronique et le dispositif électronique partagent la connaissance de l'identifiant de référence. L'appareil électronique émetteur est configuré pour insérer l'identifiant de référence au sein des données qu'il émet.

Tant que les données reçues par le module d'authentification MA ne contiennent pas l'identifiant de référence, rien de plus ne se passe. En revanche, à détection de l'identifiant de référence, les données sont transmises à l'unité de stockage de données ST, qui émet alors une requête à destination de l'organe de commande OC. On note que les données reçues par le module d'authentification MA sont éventuellement chiffrées, pour cette raison le module d'authentification MA peut en outre comprendre des moyens de déchiffrement. Toutefois, un déchiffrement des données peut être réalisé au niveau de l'organe de commande OC. Enfin, lorsque l'organe de commande OC reçoit une requête appropriée provenant de l'unité de stockage de données ST, il accède à ladite unité ST via les moyens de transmission TR. Dans le cas où le dispositif électronique DS est une montre électronique, les données peuvent être des données de réglage ou de configuration de la montre. Ainsi, l'organe de commande peut utiliser lesdites données pour agir sur le moteur pas à pas et régler la position des moyens d'affichage.

## Revendications

1. Montre électronique (DS) permettant de recevoir des données, comprenant :
• Une source d'énergie électrique (PL)
• Un organe de commande (OC) agencé pour être alimenté par la source d'énergie électrique (PL)
• Un module de réception (MR) comprenant :
∘ Un capteur optique (CA) apte à détecter une séquence d'impulsions lumineuses modulées par des données, et convertir ladite séquence en un signal numérique
∘ Un élément de stockage d'énergie (CP) agencé pour stocker de l'énergie électrique générée par le capteur optique (CA), l'élément de stockage d'énergie (CP) étant un condensateur
∘ Un démodulateur (DM) agencé pour être alimenté par l'élément de stockage d'énergie (CP), apte à extraire les données du signal numérique
∘ Des moyens de transmission (TR) aptes à transmettre les données extraites à l'organe de commande (OC).

2. Montre électronique (DS) selon la revendication précédente, comprenant un module d'authentification (MA) agencé pour être alimenté par l'élément de stockage d'énergie (CP), connecté à une sortie du démodulateur (DM), et apte à extraire des données un identifiant et le comparer à un identifiant de référence, les moyens de transmission (TR) étant configurés pour ne transmettre que les données comportant l'identifiant de référence.

3. Montre électronique (DS) selon la revendication précédente, le module d'authentification (MA) étant apte à déchiffrer les données.

4. Montre électronique (DS) selon l'une des revendications précédentes, le module de réception (MR) comprenant une unité de stockage de données (ST) agencée pour être alimenté par l'élément de stockage d'énergie (CP), connectée au module d'authentification (MA), et accessible par l'organe de commande (OC) via les moyens de transmission (TR).

5. Montre électronique (DS) selon la revendication précédente, l'unité de stockage de données (ST) étant agencée pour être alimentée par la source d'énergie électrique (PL).

6. Montre électronique (DS) selon la revendication 4, l'unité de stockage de données (ST) étant agencée pour être alimentée par l'élément de stockage d'énergie (CP).

7. Montre électronique (DS) selon l'une des revendications précédentes, le module de réception (MR) comprenant un système de contrôle automatique de gain (SG), agencé pour être alimenté par l'élément de stockage d'énergie (CP), connecté entre le capteur optique (CA) et le démodulateur (DM).

8. Montre électronique (DS) selon l'une des revendications précédentes, le démodulateur (DM) étant apte à extraire un signal d'horloge du signal numérique.

9. Montre électronique (DS) selon l'une des revendications précédentes, le capteur optique (CA) étant une photodiode.

10. Montre électronique (DS) selon l'une des revendications 1 à 8, le capteur optique (CA) étant un phototransistor.

11. Montre électronique (DS) selon l'une des revendications 1 à 8, le capteur optique (CA) étant une cellule photovoltaïque.

12. Montre électronique (DS) selon l'une des revendications précédentes, la source d'énergie électrique (PL) étant une pile.

## Patentansprüche

1. Elektronische Uhr (DS) zum Empfangen von Daten, umfassend:
• eine elektrische Energiequelle (PL),
• ein Stellglied (OC), das so angeordnet ist, dass es von der elektrischen Energiequelle (PL) versorgt wird, und
• ein Empfangsmodul (MR), umfassend:
∘ einen optischen Sensor (CA), der geeignet ist, eine Sequenz von Lichtimpulsen, die durch Daten moduliert werden, zu erfassen und die Sequenz in ein digitales Signal umzuwandeln,
∘ eine Energiespeichereinheit (CP), die zum Speichern der durch den optischen Sensor (CA) erzeugten elektrischen Energie angeordnet ist, wobei die Energiespeichereinheit (CP) ein Kondensator ist,
∘ einen Demodulator (DM), der so angeordnet ist, dass er durch die Energiespeichereinheit (CP) versorgt wird, und geeignet ist, die Daten aus dem digitalen Signal zu extrahieren,
∘ Übertragungsmittel (TR), die geeignet sind, die extrahierten Daten an das Stellglied (OC) zu übertragen.

2. Elektronische Uhr (DS) nach dem vorhergehenden Anspruch, umfassend ein Authentifizierungsmodul (MA), das so angeordnet ist, dass es durch die Energiespeichereinheit (CP) versorgt wird, mit einem Ausgang des Demodulators (DM) verbunden ist und geeignet ist, Daten aus einer Kennung zu extrahieren und sie mit einer Referenzkennung zu vergleichen, wobei die Übertragungsmittel (TR) konfiguriert sind, nur Daten zu übertragen, die die Referenzkennung enthalten.

3. Elektronische Uhr (DS) nach dem vorhergehenden Anspruch, wobei das Authentifizierungsmodul (MA) geeignet ist, die Daten zu entschlüsseln.

4. Elektronische Uhr (DS) nach einem der vorhergehenden Ansprüche, wobei das Empfangsmodul (MR) eine Datenspeichereinheit (ST) umfasst, die so angeordnet ist, dass sie von der Energiespeichereinheit (CP) versorgt wird, mit dem Authentifizierungsmodul (MA) verbunden ist und dem Stellglied (OC) über die Übertragungsmittel (TR) einen Zugriff ermöglicht.

5. Elektronische Uhr (DS) nach dem vorhergehenden Anspruch, wobei die Datenspeichereinheit (ST) so angeordnet ist, dass sie von der elektrischen Energiequelle (PL) versorgt wird.

6. Elektronische Uhr (DS) nach Anspruch 4, wobei die Datenspeichereinheit (ST) so angeordnet ist, dass sie von der Energiespeichereinheit (CP) versorgt wird.

7. Elektronische Uhr (DS) nach einem der vorhergehenden Ansprüche, wobei das Empfangsmodul (MR) ein automatisches Verstärkungsregelungssystem (SG) umfasst, das so angeordnet ist, dass es von der Energiespeichereinheit (CP) versorgt wird, und zwischen den optischen Sensor (CA) und den Demodulator (DM) geschaltet ist.

8. Elektronische Uhr (DS) nach einem der vorhergehenden Ansprüche, wobei der Demodulator (DM) geeignet ist, aus dem digitalen Signal ein Taktsignal zu extrahieren.

9. Elektronische Uhr (DS) nach einem der vorhergehenden Ansprüche, wobei der optische Sensor (CA) eine Fotodiode ist.

10. Elektronische Uhr (DS) nach einem der Ansprüche 1 bis 8, wobei der optische Sensor (CA) ein Fototransistor ist.

11. Elektronische Uhr (DS) nach einem der Ansprüche 1 bis 8, wobei der optische Sensor (CA) eine Fotovoltaikzelle ist.

12. Elektronische Uhr (DS) nach einem der vorhergehenden Ansprüche, wobei die elektrische Energiequelle (PL) eine Batterie ist.

## Claims

1. Electronic watch (DS) allowing data to be received, comprising:
• An electrical energy source (PL)
• A control member (OC) arranged to be supplied with power by the electrical energy source (PL)
• A receiver module (MR) comprising:
∘ An optical sensor (CA) capable of detecting a sequence of light pulses modulated by data, and of converting said sequence into a digital signal
∘ An energy storage element (CP) arranged to store electrical energy generated by the optical sensor (CA), said energy storage element (CP) being a capacitor
∘ A demodulator (DM) arranged to be supplied with power by the energy storage element (CP), capable of extracting the data from the digital signal
∘ Transmission means (TR) capable of transmitting the extracted data to the control member (OC).

2. Electronic watch (DS) according to the preceding claim, comprising an authentication module (MA) arranged to be supplied with power by the energy storage element (CP), connected to an output of the demodulator (DM), and capable of extracting an identifier from the data and of comparing it with a reference identifier, the transmission means (TR) being configured to transmit only those data including the reference identifier.

3. Electronic watch (DS) according to the preceding claim, the authentication module (MA) being capable of decrypting the data.

4. Electronic watch (DS) according to one of the preceding claims, the receiver module (MR) comprising a data storage unit (ST) arranged to be supplied with power by the energy storage element (CP), which unit is connected to the authentication module (MA), and can be accessed by the control member (OC) via the transmission means (TR).

5. Electronic watch (DS) according to the preceding claim, the data storage unit (ST) being arranged to be supplied with power by the electrical energy source (PL).

6. Electronic watch (DS) according to claim 4, the data storage unit (ST) being arranged to be supplied with power by the energy storage element (CP).

7. Electronic watch (DS) according to one of the preceding claims, the receiver module (MR) comprising an automatic gain control system (SG), arranged to be supplied with power by the energy storage element (CP), connected between the optical sensor (CA) and the demodulator (DM).

8. Electronic watch (DS) according to one of the preceding claims, the demodulator (DM) being capable of extracting a clock signal from the digital signal.

9. Electronic watch (DS) according to one of the preceding claims, the optical sensor (CA) being a photodiode.

10. Electronic watch (DS) according to one of claims 1 to 8, the optical sensor (CA) being a phototransistor.

11. Electronic watch (DS) according to one of claims 1 to 8, the optical sensor (CA) being a photovoltaic cell.

12. Electronic watch (DS) according to one of the preceding claims, the electrical energy source (PL) being a cell.
